# EUROPÄISCHE PATENTSCHRIFT

(11) **EP 2 347 070 B1**
(45) Veröffentlichungstag und Bekanntmachung des Hinweises auf die Patenterteilung: **29.05.2013**
(21) Anmeldenummer: 09779067.9
(22) Anmeldetag: 17.02.2009
(51) Int. Cl.: E05B 65/20

(54) **HANDHABE FÜR EIN KRAFTFAHRZEUG**
HANDLE FOR A MOTOR VEHICLE
POIGNÉE POUR VÉHICULE AUTOMOBILE

(30) Priorität: 20.11.2008 DE 102008058341; 02.12.2008 DE 102008059917
(43) Veröffentlichungstag der Anmeldung: 27.07.2011
(73) Patentinhaber: Huf Hülsbeck & Fürst GmbH & Co. KG, 42551 Velbert (DE)
(72) Erfinder: MÖNIG, Stefan, 58332 Schwelm (DE); NEUHOFF, Stefan, 45329 Essen (DE); LÖW, Matthias, 40855 Ratingen (DE); MÜLLER, Ralph, 42549 Velbert (DE)
(86) Internationale Anmeldenummer: PCT/EP2009/051878
(87) Internationale Veröffentlichungsnummer: WO 2010/057681

(56) Entgegenhaltungen:
- EP-A- 1 454 731
- WO-A-03/050371
- DE-A1-102005 046 119
- US-A- 5 690 884

## Beschreibung

Die Erfindung betrifft eine Handhabe für ein Kraftfahrzeug mit einem vom Benutzer zu erfassenden Griffteil, das mit einer Höhlung ausgeführt ist und mehrere Funktionsteile aufweist, wobei ein erstes Funktionsteil eine Elektronikkomponente aufweist, die innerhalb der Höhlung sich befindet, ein zweites Funktionsteil ein Grifflager aufweist und einer Vergussmasse, die die Höhlung vollständig ausfüllt und die Elektronikkomponente innerhalb des Griffteils fixiert. Des Weiteren betrifft die Erfindung ein Verfahren zur Herstellung der zuvor genannten Handhabe.

In der EP 1 454 731 A1 ist eine Handhabe sowie ein Verfahren zur Herstellung dieser Handhabe beschrieben. Hierbei besteht die Handhabe aus einer hohlen Grundform, innerhalb dieser eine Elektronikkomponente sich befindet. Nachdem diese Elektronikkomponente in die Höhlung, die auch als Kavität bezeichnet werden kann, während des Montageprozesses eingeführt ist, wird anschließend die Höhlung von beiden Seiten verschlossen und daraufhin eine Vergussmasse in die Höhlung eingeführt. Hierbei ist es denkbar, dass während der Einbringung der Vergussmasse die Elektronikkomponente ihre Position innerhalb des Griffteils ungewollt verändern kann, welches etwaig negative Folgen, insbesondere bei der Funktionsweise der Handhabe nach sich ziehen kann.

Die Aufgabe der vorliegenden Erfindung ist es, die oben genannten Nachteile zu verhindern, insbesondere eine Handhabe zu schaffen, die eine gute Funktionalität aufweist und mit einem geringen Herstellungsaufwand produziert werden kann.

Die Aufgabe der vorliegenden Erfindung wird durch alle Merkmale des Patentanspruches 1 gelöst. In den abhängigen Ansprüchen 2 bis 15 sind bevorzugte Ausführungsformen dargestellt.

Dazu ist erfindungsgemäß vorgesehen, dass das erste und das zweite Funktionsteil jeweils als separate Bauteile zum Griffteil ausgeführt sind und beide Teile gleichzeitig die Höhlung verschließen, wobei beide Funktionsteile mit innerhalb der Höhlung sich befindenden Verbindungsbereichen ausgeführt sind, die zur zuverlässigen Befestigung der Funktionsteile im Griffteil dienen. Der wesentliche Kern der Erfindung ist, dass das erste und das zweite Funktionsteil innerhalb der Höhlung vorfixiert sind, bevor die Vergussmasse in die Höhlung eingebracht wird. Hierdurch wird verhindert, dass während der Herstellung der Handhabe das erste Funktionsteil mit der Elektronikkomponente seine Position innerhalb des Griffteils ungewollt verändert. Die Verbindungsbereiche beider Funktionsteile befinden sich innerhalb der Höhlung und sind vorzugsweise derart zueinander angeordnet, dass im montierten Zustand - bevor die Vergussmasse in die Höhlung eingeführt wird - das erste Funktionsteils vom zweiten Funktionsteil zuverlässig innerhalb der Höhlung gehalten wird, ohne dass die Gefahr besteht, dass während des Montagevorganges eines der beiden Funktionsteile ungewollt sich aus der Höhlung löst. Somit kann eine Sicherung der Position beider Funktionsteile innerhalb des Griffteils zuverlässig gewährleistet werden. Eine endgültige Fixierung beider Funktionsteile erfolgt anschließend über die Vergussmasse, die in die Höhlung eingeführt wird und vollständig diese Höhlung ausfüllt, wodurch nach der Erstarrung der Vergussmasse die Position des ersten und des zweiten Funktionsteils sowie auch der an das erste Funktionsteil angeordneten Elektronikkomponente endgültig gesichert ist.

In einer möglichen Ausführungsform der Erfindung kann das erste Funktionsteil mit dem zweiten Funktionsteil unmittelbar miteinander befestigt sein. Bei dieser Ausführungsform ist zu beachten, dass das erste und das zweite Funktionsteil sich zwar innerhalb der Höhlung, wenn auch nur bereichsweise, befinden, jedoch eine Befestigung nur zwischen dem ersten und dem zweiten Funktionsteil erfolgt, bevor die Vergussmasse eingeführt wird. Vorteilhafterweise ist das erste und das zweite Funktionsteil zumindest nach einer stoffschlüssigen, kraftschlüssigen und/oder formschlüssigen Verbindung miteinander befestigt. Beide Funktionsteile können beispielsweise über eine Schraubverbindung miteinander verbunden sein. Ebenfalls ist alternativ eine Rastverbindung oder eine Schweißverbindung zwischen beiden Funktionsteilen denkbar.

In einer möglichen Ausführungsform der Erfindung weist das Griffteil eine Eingangsöffnung und eine Ausgangsöffnung auf, wobei die Öffnungen jeweils durch ein Funktionsteil verschlossen sind. Aufgrund des Montageprozesses des Griffteils mit einer Höhlung ist es denkbar, dass eine Eingangsöffnung und Ausgangsöffnung entstehen, die in einem weiteren Verfahrensschritt zu schließen sind. Hierbei ist es denkbar, dass beispielsweise durch ein Gas-Innendruck-Verfahren oder durch so genannte Bananenschieber das Griffteil mit einer entsprechenden Höhlung ausgeformt wird. Besonders vorteilhaft bei dieser Erfindung ist, dass beide Funktionsteile gleichzeitig als Deckel oder Verschlusselemente dienen können, um die entstandene Eingangsöffnung sowie Ausgangsöffnung zu verschließen, welches sich auf den Herstellungsaufwand einer Handhabe positiv auswirkt.

Vorteilhafterweise weist das erste Funktionsteil einen Träger auf, an dem die Elektronikkomponente befestigt ist. Der Träger kann mit Mitteln ausgeführt sein, die zuverlässig die Elektronikkomponente am ersten Funktionsteil halten, ohne dass die Gefahr besteht, dass während des Einführens des ersten Funktionsteils in die Höhlung des Griffteils die Elektronikkomponente ungewollt sich löst.

In einer die Erfindung verbessernden Maßnahme ist der Träger mit einer Aufnahmegeometrie zur Anordnung der Elektronikkomponente ausgebildet, wobei die Aufnahmegeometrie einen Kanal aufweist, innerhalb dieses die Elektronikkomponente verläuft, wobei der Kanal mehrere Eintrittsöffnungen aufweist, wodurch der Kanal zumindest bereichsweise offen ausgestaltet ist, so dass die Vergussmasse sich auch innerhalb des Kanals befindet. Die Elektronikkomponente erstreckt sich entlang des Kanals, der als eine Art Korsett für die Elektronikkomponente dienen kann. Damit die Elektronikkomponente zuverlässig innerhalb des Kanals fixiert werden kann, begünstigen die Eintrittsöffnungen des Kanals, dass die Vergussmasse vollständig die Elektronikkomponente umgibt, so dass eine endgültige Positionssicherung der Elektronikkomponente am ersten Funktionsteil sowie innerhalb der Höhlung erzielbar ist.

Besonders vorteilhaft kann sein, dass Positionierungsmittel vorgesehen sind, die während der Montage die Einstecklage des ersten und/oder des zweiten Funktionsteils definieren, wobei insbesondere die Positionierungsmittel an den Funktionsteilen und/oder am Griffteil vorgesehen sind. Die Positionierungsmittel können beispielsweise Anschlagflächen sein, die am Griffteil innerhalb der Höhlung oder auch an den Funktionsteilen angeordnet sind. Hierdurch kann die Einstecklage beider Funktionsteile bereits vor der Einführung der Vergussmasse in die Höhlung erreicht werden.

Vorteilhafterweise ist das erste Funktionsteil mit einem Griffdom ausgeführt, der zur Betätigung eines am Kraftfahrzeug angeordneten Schlosses dient. Hierbei ragt der Griffdom in die Kraftfahrzeugtür hinein und dient als Betätigungsansatz, um über eine Bewegung des Griffteils ein fahrzeugseitiges Betätigungselement zu aktivieren, wodurch das Schloss der Kraftfahrzeugtür geöffnet werden kann. Alternativ kann der Griffdom mit dem Griffteil ein einheitliches Bauteil bilden, wobei das erste Funktionsteil in die Höhlung einbringbar ist.

Zweckmäßigerweise kann das erste Funktionsteil am Bereich der Eingangsöffnung und/oder das zweite Funktionsteil am Bereich der Ausgangsöffnung eine Dichtung aufweisen, wodurch ein Austritt der Vergussmasse aus der Höhlung während des Herstellungsverfahrens der Handhabe verhindert wird.

In einer vorteilhaften Ausführung der Erfindung könnte die Vergussmasse zur form - und/oder stoffschlüssigen Verbindung des Griffteils sowie des ersten und des zweiten Funktionsteils genutzt werden. Hierbei kann es von Vorteil sein, wenn das zweite Funktionsteil zumindest bereichsweise, insbesondere nahezu vollständig durch die Vergussmasse umgeben ist. Ebenfalls ist es denkbar, dass das Griffteil mit dem ersten und/oder dem zweiten Funktionsteil form- und/oder kraftschlüssig miteinander verbunden wird, bevor die Vergussmasse in die Höhlung des Griffteils eingebracht wird. Hierdurch kann eine zusätzliche Fixierung des ersten und des zweiten Funktionsteils innerhalb des Griffteils erzielt werden.

Ebenfalls ist es denkbar, dass das erste Funktionsteil mit einem Griffdom ausgeführt ist, der zur Betätigung eines am Kraftfahrzeug angeordneten Schlosses dient. In einer alternativen Ausführungsform der Handhabe kann der Verbindungsbereich des ersten Funktionsteils am Griffteil befestigt sein, wobei gleichzeitig das erste Funktionsteil den Verbindungsbereich des zweiten Funktionsteils zuverlässig innerhalb der Höhlung hält. Es hat sich gezeigt, dass gerade im Bereich des Grifflagers am zweiten Funktionsteil bei der manuellen Aktivierung der Handhabe bzw. des Griffteils große Kräfte auftreten, die unter anderem vom zweiten Funktionsteil aufgefangen werden müssen. Damit ein zuverlässiger Halt des zweiten Funktionsteils innerhalb der Höhlung gewährleistet ist, hält das erste Funktionsteil sicher den Verbindungsbereich des zweiten Funktionsteils innerhalb der Höhlung, wobei gleichzeitig der Verbindungsbereich des ersten Funktionsteils am Griffteil innerhalb der Höhlung befestigt ist.

Hierbei ist es denkbar, dass der Verbindungsbereich des ersten Funktionsteils als Rastelement ausgeführt ist, das an einem innerhalb der Höhlung vorgesehenen Gegenrastelement des Griffteils angreift. Der Verbindungsbereich des zweiten Funktionsteils kann mit einer Öffnung ausgeführt sein, durch die der Verbindungsbereich des ersten Funktionsteils sich erstreckt.

Ferner kann die oben genannte Aufgabe durch ein Verfahren mit den Merkmalen des Anspruches 16 gelöst werden. In den abhängigen Verfahrensansprüchen sind vorteilhafte Ausführungsformen beschrieben.

Die herzustellende Handhabe weist hierbei ein vom Benutzer zu erfassendes Griffteil auf, das mit einer Höhlung (Kavität) ausgeführt ist und mehrere Funktionsteile aufweist. Das erste Funktionsteil weist eine Elektronikkomponente auf, die innerhalb der Höhlung sich befindet und ein zweites Funktionsteil ist mit einem Grifflager ausgebildet. Innerhalb der Höhlung befindet sich eine Vergussmasse, die das erste und das zweite Funktionsteil sowie die Elektronikkomponente innerhalb des Griffteils fixiert. Die Höhlung ist hierbei vollständig durch die Vergussmasse ausgefüllt. Diese Handhabe wird durch folgende Schritte hergestellt: Zunächst wird das Griffteil mit der Höhlung spritzgusstechnisch hergestellt, wobei die Höhlung eine Eingangsöffnung und eine Ausgangsöffnung aufweist. Im folgenden Schritt werden das erste und das zweite Funktionsteil in die Höhlung des Griffteils eingeführt. Anschließend erfolgt eine Befestigung eines Verbindungsbereiches des ersten Funktionsteils und eines Verbindungsbereiches des zweiten Funktionsteils innerhalb der Höhlung. Im letzten Schritt wird die Vergussmasse in die Höhlung eingebracht, wodurch eine endgültige Fixierung der beiden Funktionsteile sowie der Elektronikkomponente erreicht wird.

Hierbei ist es denkbar, dass der Verbindungsbereich des ersten Funktionsteils und der Verbindungsbereich des zweiten Funktionsteils unmittelbar miteinander innerhalb der Höhlung befestigt werden, bevor die Einbringung der Vergussmasse in die Höhlung erfolgt.

Vorteilhafterweise wird das erste Funktionsteil durch die Eingangsöffnung und das zweite Funktionsteil durch die Ausgangsöffnung in die Höhlung eingeführt, wobei in der Einstecklage das erste Funktionsteil die Eingangsöffnung und das zweite Funktionsteil die Ausgangsöffnung verschließt.

In einer vorteilhaften Alternative ist mindestens eine Öffnung am ersten und/oder am zweiten Funktionsteil vorgesehen, durch die die Vergussmasse in die Höhlung eingebracht wird. Hierbei ist es denkbar, dass die Vergussmasse nur an einer Seite im Bereich der Eingangsöffnung oder lediglich im Bereich der Ausgangsöffnung über die Öffnung des ersten oder des zweiten Funktionsteils eingeführt wird.

In einer weiteren Möglichkeit der Erfindung wird zuerst das erste Funktionsteil bis zu seiner Einstecklage in die Höhlung des Griffteils eingeschoben, anschließend ein Kontaktelement der Elektronikkomponente durch eine Bohrung des zweiten Funktionsteils geführt und dann das zweite Funktionsteil in die Höhlung eingebracht. Das Kontaktelement kann beispielsweise ein Kabel sein, das von der Elektronikkomponente ausgeht und an seinem freien Ende einen Stecker aufweist, der mit einem fahrzeugseitigen Gegenstecker verbindbar ist. Die Elektronikkomponente kann hierbei diverse elektronische Bauteile umfassen, die beispielsweise in einem "Keyless-Entry"-System eines Kraftfahrzeugschließsystems zum Einsatz kommen. Denkbar ist, dass diverse Sensoren, insbesondere Annäherungssensoren, Berührungssensoren und/oder dergleichen in der Elektronikkomponente integriert sind.

In einer weiteren Ausgestaltung kann das erste und das zweite Funktionsteil jeweils an seinem freien Ende, das sich innerhalb der Höhlung befindet, mit einem Verbindungsbereich ausgeführt sein, die miteinander formschlüssig, stoffschlüssig und/oder kraftschlüssig verbunden werden, bevor die Vergussmasse in die Höhlung eingebracht wird. Die Verbindungsbereiche können beispielsweise als Auflageflächen ausgeführt sein, die in der Einstecklage des ersten und des zweiten Funktionsteils zumindest bereichsweise aufeinander liegen. In einer weiteren Ausführungsform der Erfindung kann der Verbindungsbereich des zweiten Funktionsteils taschenartig einseitig offen ausgeführt sein, in die der Verbindungsbereich des ersten Funktionsteils hineinsteckbar ist.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: ein Griffteil einer erfindungsgemäßen Handhabe eines Kraftfahrzeuges,
- Figur 2: das Griffteil gemäß Figur 1, wobei ein erstes und ein zweites Funktionsteil am Griffteil eingeschoben sind,
- Figur 3: das Griffteil gemäß Figur 2, wobei eine Vergussmasse innerhalb des hohlförmigen Griffteils eingeführt ist,
- Figur 4: eine weitere Ausführungsalternative der Befestigung des ersten Funktionsteils mit dem zweiten Funktionsteil in einer vergrößerten Darstellung,
- Figur 5: eine weitere Alternative der Befestigung des ersten Funktionsteils mit dem zweiten Funktionsteil,
- Figur 6: eine weitere Alternative eines Griffteils einer erfindungsgemäßen Handhabe,
- Figur 7: eine Detailansicht des Griffteils gemäß Figur 6 und
- Figur 8: das zweite Funktionsteil in dreidimensionaler Ansicht des Griffteils gemäß Figur 6.

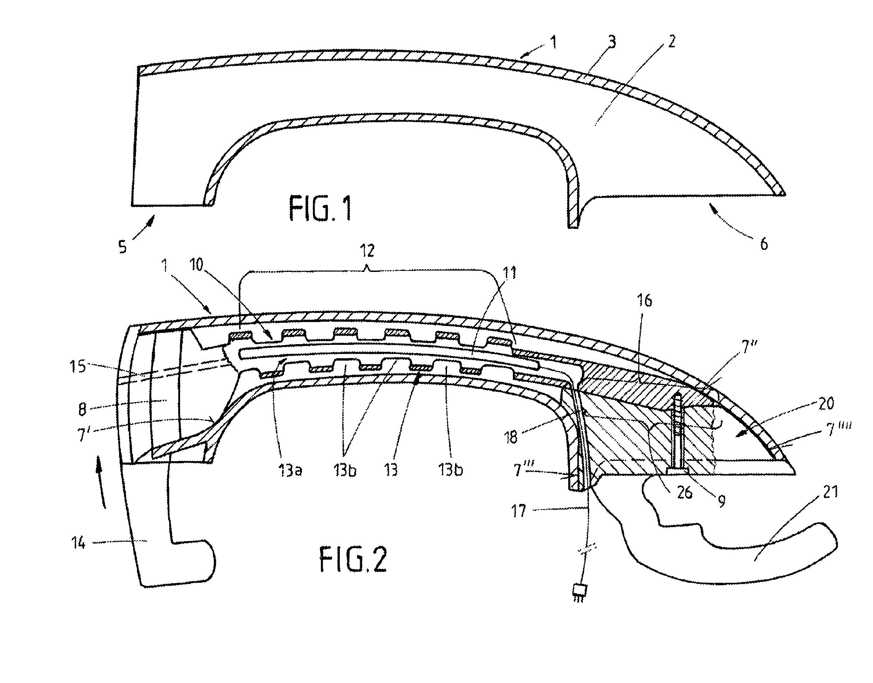

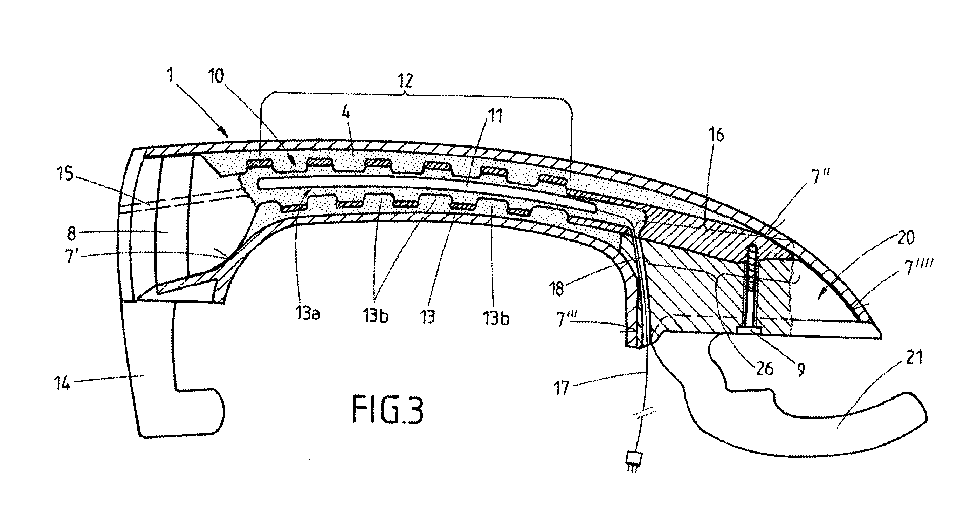

Figur 1 zeigt ein Griffteil 3 einer erfindungsgemäßen Handhabe 1, die im vollständig hergestellten Zustand in Figur 3 gezeigt ist. Das Griffteil 3 ist hohl ausgeführt und weist in seinem Innenraum eine Höhlung 2 auf, in die ein erstes Funktionsteil 10 und ein zweites Funktionsteil 20 einbringbar sind, worauf im Folgenden gemäß Figur 2 und Figur 3 noch eingegangen wird. Das Griffteil 3 weist eine Eingangsöffnung 5 sowie eine Ausgangsöffnung 6 auf. In einem ersten Verfahrensschritt wird zunächst spritzgusstechnisch das Griffteil 3 mit einer gewissen Wandstärke hergestellt. Im folgenden Schritt wird das erste und das zweite Funktionsteil 10,20 in die Höhlung 2 des Griffteils 3 eingeführt. Im vorliegenden Ausführungsbeispiel wird zunächst das Funktionsteil 10 an der Eingangsöffnung 5 angeordnet. Anschließend wird das zweite Funktionsteil 20 an der Ausgangsöffnung 6 des Griffteils 3 befestigt. Beide Funktionsteile 10,20 verschließen zuverlässig beide Öffnungen 5,6.

Das erste Funktionsteil 10 ist mit einem Träger 12 ausgeführt, der in die Höhlung 2 sich hinein erstreckt. Am Träger 12 ist eine Elektronikkomponente 11 angeordnet. Wie gemäß Figur 2 zu erkennen ist, hat das erste Funktionsteil 10, insbesondere der Träger 12 innerhalb des Griffteils 3 einen bogenförmigen Verlauf, der entsprechend der Form des Griffteils 3 angepasst ist. In dem dargestellten Ausführungsbeispiel ist der Träger 12 mit einer Aufnahmegeometrie 13 ausgebildet, die zur zuverlässigen Anordnung der Elektronikkomponente 11 dient. Die Aufnahmegeometrie 13 weist einen Kanal 13a auf, innerhalb dieses Kanals 13a die Elektronikkomponente 11 verläuft. Des Weiteren weist der Kanal 13a mehrere Eintrittsöffnungen 13b auf. Die Aufnahmegeometrie 13 übernimmt während der Einführung des Trägers 12 in die Höhlung 2 die Funktion, die Elektronikkomponente 11 möglichst in ihrer Position zu schützen und zu sichern. Die durch die Eintrittsöffnungen 13b unterbrochene Kanalwandung schützt hierbei die Elektronikkomponente 11 während der Befestigung des ersten Funktionsteils 10 am Griffteil 3.

Ferner ist das erste Funktionsteil 10 mit einem Griffdom 14 ausgeführt, der im dargestellten Ausführungsbeispiel eine hakenartige Form aufweist. Der Träger 12 sowie der Griffdom 14 bilden mit dem ersten Funktionsteil 10 ein gemeinsames, materialeinheitliches Bauteil. Bei einer Aktivierung des Griffteils 3 durch den Benutzer, das bedeutet, wenn der Benutzer beispielsweise am Griffteil 3 zieht, und dieses gemäß Figur 2 sich nach oben bewegt, wird über ein nicht dargestelltes Bauteil, das innerhalb der Kraftfahrzeugtür angeordnet ist, eine Betätigung eines am Kraftfahrzeug angeordneten Schlosses erzeugt. Der Griffdom 14 kann alternativ auch mit dem Griffteil 3 ein einheitliches Bauteil bilden, welches explizit nicht dargestellt ist.

Das zweite Funktionsteil 20 ist mit einem Grifflager 21 ausgeführt, welches innerhalb der nicht dargestellten Kraftfahrzeugtür gelagert ist. Nachdem das erste Funktionsteil 10 in die Einstecklage gemäß Figur 2 gebracht worden ist, wird anschließend das Kabel 17 der Elektronikkomponente 11 durch eine entsprechende Bohrung 18 des zweiten Funktionsteils 20 geführt. Dieses Kabel 17 weist an seinem Ende ein Steckerelement auf, welches mit einem fahrzeugseitigen Gegensteckelement in Verbindung gebracht werden kann. Anschließend wird das zweite Funktionsteil 20 samt Kabel17 in die Ausgangsöffnung 6 des Griffteils 3 geführt.

Das erste und das zweite Funktionsteil 10,20 weisen an diversen Stellen Positionierungsmittel 7 auf, die während der Montage ihre jeweilige Einstecklage definieren. Das erste Funktionsteil 10 weist beispielsweise an der der Eingangsöffnung 5 zugewandten Seite eine Kontur 7' auf, die der Geometrie der anliegenden Wandung des Griffteils 3 angepasst ist. Des Weiteren weist das erste Funktionsteil 10 an der der Ausgangsöffnung 6 zugewandten Seite ein weiteres Positionierungsmittel 7", welches ebenfalls formschlüssig an der Wandung des Griffteils 3 anliegt und als eine Art Anschlag dient. Auch das zweite Funktionsteil 20 weist Positionierungsmittel 7"',7"" auf, die unmittelbar und formschlüssig an der zugewandten Wandungsseite des Griffteils 3 anliegen und ebenfalls die gewünschte Einstecklage des Griffteils 3 definieren.

Wie in Figur 2 zu erkennen ist, ist das erste 10 und das zweite Funktionsteils 20 jeweils an seinem freien Ende, das sich innerhalb der Höhlung 2 befindet, mit einem flächigen Verbindungsbereich 16,26 ausgeführt, die unmittelbar aufeinander liegen und über eine Schraubverbindung 9 miteinander verbunden sind. Auch die Verbindungsbereiche 16,26 dienen als Anschlaghilfen bei der Montage beider Funktionsteile 10,20. Gemäß dieses Ausführungsbeispiels ist es jedoch ebenfalls denkbar, dass alternative Verbindungen zum Einsatz kommen können, beispielsweise formschlüssige, stoffschlüssige und/oder kraftschlüssige Befestigungen. Das besondere bei dieser Erfindung ist, dass das erste Funktionsteil 10 lediglich mit dem zweiten Funktionsteil 20 innerhalb der Höhlung 2 befestigt wird, bevor eine Vergussmasse 4 gemäß Figur 3 in die Höhlung 2 eingeführt wird. Damit die Vergussmasse 4 nicht aus dem Griffteil 3 wieder austritt, ist das erste Funktionsteil 10 mit einer Dichtung 8 ausgeführt. Im vorliegenden Ausführungsbeispiel wird die Vergussmasse 4 über eine kanalförmige Öffnung 15 des ersten Funktionsteils 10, die in die Höhlung 2 mündet, in den Innenbereich des Griffteils 3 eingeführt. Die Vergussmasse 4 füllt vollständig die Höhlung 2 aus, wobei die Vergussmasse 4 ebenfalls durch die Eintrittsöffnungen 13b der Aufnahmegeometrie 13 tritt und den Kanal 13a der Aufnahmegeometrie 13 vollständig füllt. Im erstarrten Zustand der Vergussmasse 4 ist die Position des ersten Funktionsteils 10 einschließlich der Elektronikkomponente 11 sowie des zweiten Funktionsteils 20 endgültig gesichert. Die hergestellte Handhabe 1 gemäß Figur 3 kann anschließend an eine Kraftfahrzeugtür montiert werden. Im dargestellten Ausführungsbeispiel ist vor dem Verfahrensschritt des Einführens des ersten und des zweiten Funktionsteils 10,20 in die Höhlung 2 das Griffteil 3 bereits lackiert.

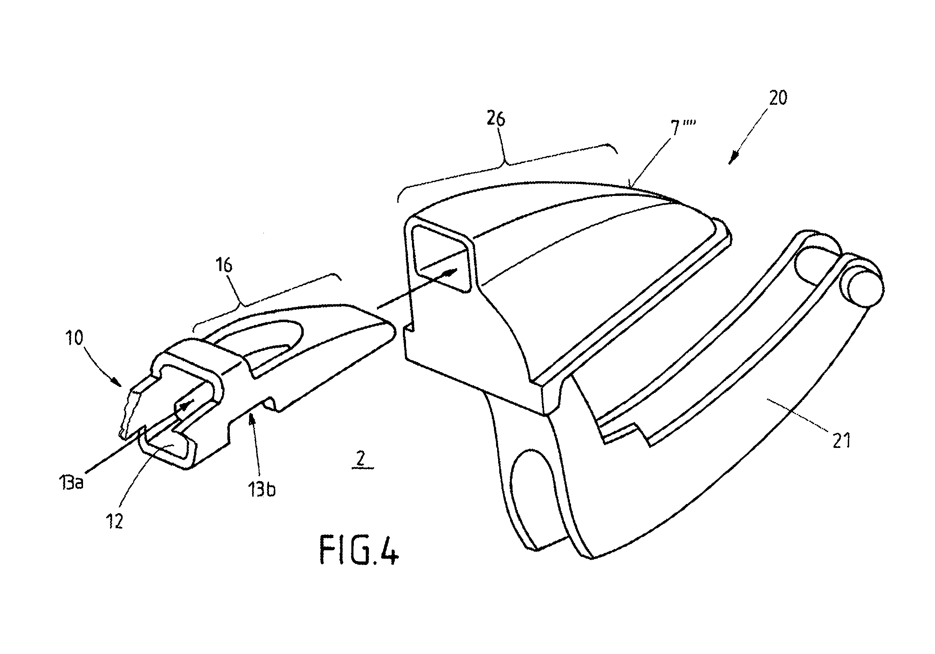

In Figur 4 ist eine weitere Alternative zur formschlüssigen Befestigung des ersten Funktionsteils 10 mit dem zweiten Funktionsteil 20 dargestellt. Der Verbindungsbereich 26 des zweiten Funktionsteils 20 ist mit einer taschenförmigen Öffnung innerhalb der Höhlung 2 ausgeführt, in die der Verbindungsbereich 16 des ersten Funktionsteils 10 eingeführt werden kann. Beide Verbindungsbereiche 16,26 sind hierbei entsprechend ihrer Geometrie angepasst, so dass der Verbindungsbereich 26 des zweiten Funktionsteils 20 formschlüssig den Verbindungsbereich 16 des ersten Funktionsteils 10 hält. Selbstverständlich können die Verbindungsbereiche 16,26 zusätzlich über eine formschlüssige, stoffschlüssige und/oder kraftschlüssige Verbindung miteinander befestigt werden.

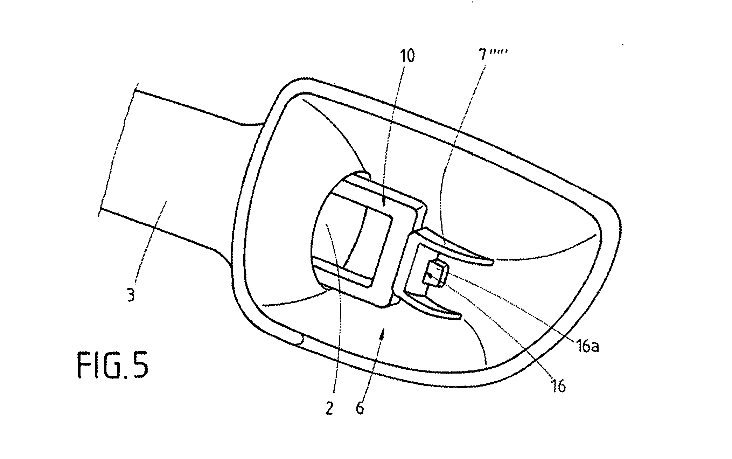

In Figur 5 ist eine weitere Ausführungsform zur formschlüssigen Befestigung des ersten Funktionsteils 10 mit dem zweiten Funktionsteil 20 gezeigt. Das erste Funktionsteil 10 ist mit einem Verbindungsbereich 16 ausgeführt, der an seinem freien Ende ein vorsprungartiges Element 16a aufweist. Im vorliegenden Ausführungsbeispiel ist das vorsprungartige Element 16a zungenartig ausgebildet. Das erste Funktionsteil 10 befindet sich innerhalb der Höhlung 2 des Griffteils 3. Das Griffteil 3 weist ein Positionierungsmittel 7""', in dem der Verbindungsbereich 16 des ersten Funktionsteils 10 zuverlässig gehalten ist. Während der Montage des Griffteils 3 wird das Funktionsteil 10 in die Höhlung 2 hineingeschoben, wobei der Verbindungsbereich 16 mit dem vorsprungartigen Element 16a durch eine Öffnung des Positionierungsmittels 7""' geführt wird. Anschließend wird ein nicht dargestelltes zweites Funktionsteil 20 in die Ausgangsöffnung 6 geführt. Das zweite Funktionsteil 20 weist einen Verbindungsbereich mit einer Aufnahmeöffnung auf, welches nicht explizit dargestellt ist, wobei in diese Aufnahmeöffnung das vorsprungartige Element 16a geführt wird. Hierdurch wird eine zuverlässige Befestigung des ersten Funktionsteils 10 mit dem zweiten Funktionsteil 20 erzielt. Wie auch in den zuvor beschriebenen Ausführungsbeispielen verschließt das zweite Funktionsteil zuverlässig die Ausgangsöffnung 6.

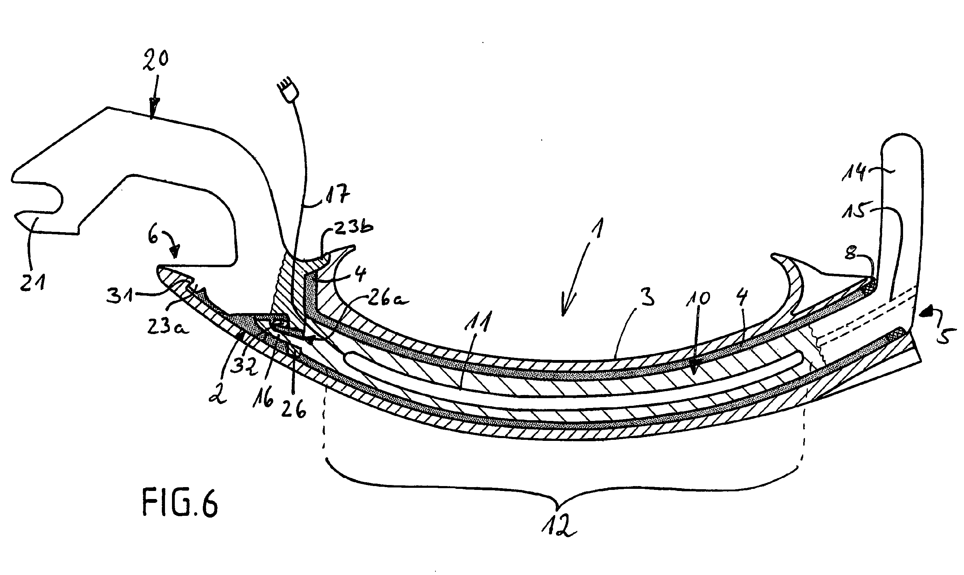

Das Ausführungsbeispiel gemäß Figur 6 bis Figur 8 zeigt eine weitere Alternative einer Handhabe 1, die ein Griffteil 3 aufweist, der hohl ausgeführt ist und in dem ein erstes 10 und ein zweites Funktionsteil 20 angebracht ist. Das erste Funktionsteil 10 weist wie im Ausführungsbeispiel gemäß Figur 1 bis Figur 5 einen Träger 12 auf, innerhalb dessen sich die Elektronikkomponente 11 befindet. Die Bauform des Trägers 12 entspricht im Wesentlichen den Ausführungen aus Figur 2 und Figur 3, bei denen der Träger 12 eine Aufnahmegeometrie zur zuverlässigen Anordnung der Elektronikkomponente 11 aufweist. Ebenfalls weist die Aufnahmegeometrie einen Kanal auf, innerhalb dessen sich die Elektronikkomponente 11 erstreckt. Nicht explizit dargestellte Eintrittsöffnungen (in Figur 2 und Figur 3 gezeigt) der Aufnahmegeometrie bewirken, dass bei einer Einfüllung der Vergussmasse 4 die Vergussmasse 4 in den Kanal der Aufnahmegeometrie vollständig gelangt und somit die Elektronikkomponente 11 endgültig in ihrer Position fixiert.

Bevor jedoch die Vergussmasse 4 in die Höhlung 2 des Griffteils 3 gefördert wird, wird im Ausführungsbeispiel gemäß Figur 6 zunächst das erste Funktionsteil 10 durch die Eingangsöffnung 5 in die Höhlung 2 des Griffteils 3 geschoben. Wie in Figur 6 zu erkennen ist, weist das erste Funktionsteil 10 einen Verbindungsbereich 16 an seinem freien Ende innerhalb der Höhlung 2 auf. Dieser Verbindungsbereich 16 des ersten Funktionsteils 10 ist im vorliegenden Ausführungsbeispiel als Rastelement 16 ausgeführt. Im ersten Montageschritt wird das Funktionsteil 10 nicht wie bis zur Figur 6 dargestellten Position in die Höhlung 2 geschoben, sondern das erste Funktionsteil 10 wird soweit in die Höhlung 2 des Griffteils 3 bewegt, dass der Verbindungsbereich 16 des ersten Funktionsteils 10 sich rechts vom Verbindungsbereich 26 des zweiten Funktionsteils 20 befindet. In dieser Position innerhalb des Griffteils 3 wird anschließend das Kontaktelement 17, - hier das Kabel 17 der Elektronikkomponente 11 - durch eine vorgesehene Bohrung, die nicht explizit mit einem Bezugszeichen versehen ist, aber der Bohrung gemäß Bezugszeichen 18 aus Figur 2 und Figur 3 entspricht, des zweiten Funktionsteils 20 geführt. Dieses Kabel 17 weist an seinem Ende ein Steckerelement auf, das mit einem fahrzeugseitigen Gegensteckelement in Verbindung gebracht werden kann. Anschließend wird das zweite Funktionsteil 20 samt Kabel 17 in die Ausgangsöffnung 6 des Griffteils 3 geführt.

Wie in Figur 6 bis Figur 8 verdeutlicht ist, ist das Griffteil 3 im Bereich der Ausgangsöffnung 6 mit einem Befestigungsmittel 31 ausgebildet, das sich in der Höhlung 2 befindet. Das Befestigungsmittel 31 ragt vorsprungartig in Richtung des zweiten Funktionsteils 20. Damit das zweite Funktionsteil 20 samt Kabel 17 in die Ausgangsöffnung 6 des Griffteils 3 geführt werden kann, muss das zweite Funktionsteil 20 während des Einsetzvorganges derart in seiner Lage horizontal gekippt werden, dass im montierten Zustand des zweiten Funktionsteils 20 die Schulter 23a am Befestigungsmittel 31 formschlüssig angreift. Im eingesetzten Zustand des zweiten Funktionsteils 20 in der Ausgangsöffnung 6 liegt die Schulter 23a am Befestigungsmittel 31 an. Gleichzeitig weist das zweite Funktionsteil 20 eine weitere Schulter 23b auf, die ebenfalls an der Wandung des Griffteils 3 zuverlässig anliegt.

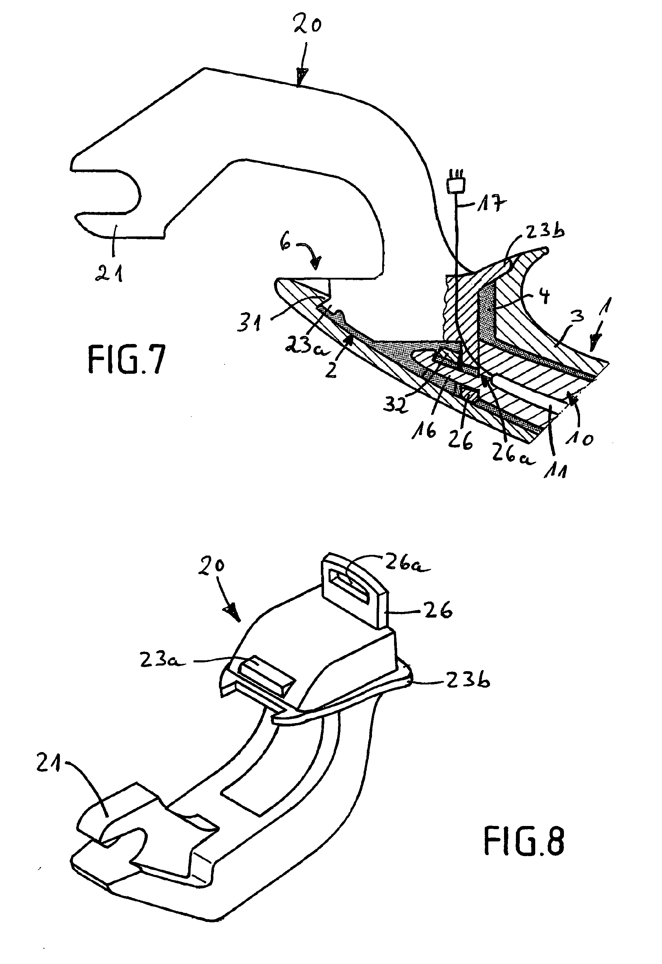

Der nächste Montageschritt ist, dass das bereits eingesetzte erste Funktionsteil 10 weiter in Richtung Ausgangsöffnung 6 des Griffteils 3 (nach links) innerhalb der Höhlung 2 verschoben wird. Hierbei durchdringt der Verbindungsbereich 16, der als Rastelement ausgeführt ist, den Verbindungsbereich 26 des zweiten Funktionsteils 20, der als Öffnung ausgeführt ist, wobei das Rastelement 16 in seiner Endstellung gemäß Figur 6 und Figur 7 an einem innerhalb der Höhlung 2 vorgesehenen Gegenrastelement 32 des Griffteils 3 angreift und dort zuverlässig befestigt ist. Das erste Funktionsteil 10 ist somit über eine Rastverbindung unmittelbar am Griffteil 3 befestigt. Gleichzeitig erstreckt sich der Verbindungsbereich 16 des ersten Funktionsteils 10 durch die Öffnung 26a des Verbindungsbereiches 26 des zweiten Funktionsteils 20, wodurch das zweite Funktionsteil 20 zuverlässig in seiner Position innerhalb der Ausgangsöffnung 6 gehalten ist, bevor die Vergussmasse 4 in die Höhlung 2 eingebracht wird. Beispielsweise ist es denkbar, über einen am ersten Funktionsteil 10 vorgesehenen Kanal 15 die Vergussmasse 4 innerhalb des Griffteils 3 einzuführen.

Hierbei kann es in einer möglichen Ausführungsform denkbar sein, dass der Verbindungsbereich 16 durch die Öffnung 26a ragt und gleichzeitig an der Wandung der Öffnung 26a anliegt. Ebenfalls kann es sinnvoll sein, dass der Verbindungsbereich 16 des ersten Funktionsteils 16 eine gewisse Kraft auf die Wandung der Öffnung 26a ausübt, die in gegengesetzter Richtung zur Ausgangsöffnung 6 wirkt. Hierdurch kann bezweckt werden, dass zusätzlich durch das eingesetzte erste Funktionsteil 10 das zweite Funktionsteil 20 zuverlässig mit einer gewissen Kraft in die Ausgangsöffnung 6 gedrückt wird.

Damit die Vergussmasse 4 nicht aus dem Griffteil 3 wieder austritt, ist das erste Funktionsteil 10 im Bereich der Eingangsöffnung 5 mit einer Dichtung 8 ausgeführt. Der Verfüllvorgang der Höhlung 2 mit der Vergussmasse 4 gemäß der Ausführungsbeispiele 1 bis 8 erfolgt in der Weise, dass die Handhabe 1 horizontal derart gekippt wird, dass sich die Eingangsöffnung 5 unten und die Ausgangsöffnung 6 sich oben befindet. Das bedeutet, dass die Handhabe 1 gemäß Figur 3 um 90° gegen den Uhrzeigersinn gedreht ist und die Handhabe 1 gemäß Figur 6 um 90° im Uhrzeigersinn gedreht ist, bevor die Befüllung von unten in die Höhlung 2 mit der Vergussmasse 4 erfolgen kann. Die Befüllung von unten hat den Vorteil, dass eine gleichmäßige und vollständige Verteilung der Vergussmasse 4 innerhalb der Höhlung 2 erfolgen kann, ohne dass etwaige Blasenbildungen innerhalb der Höhlung 2 entstehen, welches die Funktionsweise des erstarrten Griffteils 3 beeinträchtigen könnte. Damit während des Einfüllvorgangs der Vergussmasse 4 die Luft innerhalb des Griffteils 3 zuveriässig entweichen kann, sind Entlüftungsbohrungen vorgesehen, die beispielsweise am Griffteil 3, am ersten Funktionsteil 10 und/oder am zweiten Funktionsteil 20 vorgesehen sein können, die nicht explizit mit Bezugszeichen in den Figuren versehen sind.

### Bezugszeichenliste

| | |
|---|---|
| 1 | Handhabe |
| 2 | Höhlung |
| 3 | Griffteil |
| 4 | Vergussmasse |
| 5 | Eingangsöffnung |
| 6 | Ausgangsöffnung |
| 7, 7', 7", 7"', 7"", 7""' | Positionierungsmittel |
| 8 | Dichtung |
| 9 | Schraubverbindung |
| | |
| 10 | erstes Funktionsteil |
| 11 | Elektronikkomponente |
| 12 | Träger |
| 13 | Aufnahmegeometrie |
| 13a | Kanal |
| 13b | Eintrittsöffnung |
| 14 | Griffdom |
| 15 | Öffnung |
| 16 | Verbindungsbereich, Rastelement |
| 17 | Kontaktelement, Kabel, Stecker |
| 18 | Bohrung |
| | |
| 20 | zweites Funktionsteil |
| 21 | Grifflager |
| 23a | Schulter |
| 23b | Schulter |
| 26 | Verbindungsbereich |
| 26a | Öffnung |
| 31 | Befestigungsmittel, Vorsprung |
| 32 | Gegenrastelement |

## Patentansprüche

1. Handhabe (1) für ein Kraftfahrzeug mit
einem vom Benutzer zu erfassenden Griffteil (3), das mit einer Höhlung (2) ausgeführt ist und mehrere Funktionsteile (10,20) aufweist,
wobei ein erstes Funktionsteil (10) eine Elektronikkomponente (11) aufweist, die innerhalb der Höhlung (2) sich befindet,
ein zweites Funktionsteil (20) ein Grifflager (21) aufweist und
einer Vergussmasse (4), die die Höhlung (2) vollständig ausfüllt und die Elektronikkomponente (11) innerhalb des Griffteils (3) fixiert,
**dadurch gekennzeichnet,**
**dass** das erste (10) und das zweite Funktionsteil (20) jeweils als separate Bauteile zum Griffteil (3) ausgeführt sind und beide Teile (10,20) gleichzeitig die Höhlung (2) verschließen, wobei
beide Funktionsteile (10,20) mit innerhalb der Höhlung sich befindenden Verbindungsbereichen (16,26) ausgeführt sind, die zur zuverlässigen Befestigung der Funktionsteile (10,20) im Griffteil (3) dienen.

2. Handhabe (1) nach Anspruch 1,
**dadurch gekennzeichnet,**
**dass** die Funktionsteile (10,20) in der Höhlung (2) unmittelbar miteinander befestigt sind.

3. Handhabe (1) nach Anspruch 1 oder 2,
**dadurch gekennzeichnet,**
**dass** das Griffteil (3) eine Eingangsöffnung (5) und eine Ausgangsöffnung (6) aufweist, wobei die Öffnungen (5,6) jeweils durch ein Funktionsteil (10,20) verschlossen sind.

4. Handhabe (1) nach einem der vorhergehenden Ansprüche,
**dadurch gekennzeichnet,**
**dass** das erste Funktionsteil (10) einen Träger (12) aufweist, an dem die Elektronikkomponente (11) befestigt ist.

5. Handhabe (1) nach einem der vorhergehenden Ansprüche,
**dadurch gekennzeichnet,**
**dass** das erste Funktionsteil (10) innerhalb des Griffteils (3) einen bogenförmigen Verlauf hat, der entsprechend der Form des Griffteils (3) angepasst ist.

6. Handhabe (1) nach einem der vorhergehenden Ansprüche,
**dadurch gekennzeichnet,**
**dass** der Träger (12) mit einer Aufnahmegeometrie (13) zur Anordnung der Elektronikkomponente (11) ausgebildet ist, wobei
die Aufnahmegeometrie (13) einen Kanal (13a) aufweist, innerhalb dieses die Elektronikkomponente (11) verläuft, wobei der Kanal (13a) mehrere Eintrittsöffnungen (13b) aufweist, wodurch der Kanal (13a) zumindest bereichsweise offen ausgestaltet ist, so dass die Vergussmasse (4) sich auch innerhalb des Kanals (13a) befindet.

7. Handhabe (1) nach einem der vorhergehenden Ansprüche,
**dadurch gekennzeichnet,**
**dass** das erste (10) und das zweite Funktionsteil (20) zumindest nach einer stoffschlüssigen, kraftschlüssigen oder formschlüssigen Verbindung miteinander befestigt ist.

8. Handhabe (1) nach einem der vorhergehenden Ansprüche,
**dadurch gekennzeichnet,**
**dass** Positionierungsmittel (7) vorgesehen sind, die während der Montage die Einstecklage des ersten (10) und/oder des zweiten Funktionsteils (20) definieren, wobei insbesondere die Positionierungsmittel (7) an den Funktionsteilen (10,20) und/oder am Griffteil (3) vorgesehen sind.

9. Handhabe (1) nach einem der vorhergehenden Ansprüche,
**dadurch gekennzeichnet,**
**dass** der Verbindungsbereich (16) des ersten Funktionsteils (10) mit dem Verbindungsbereich (26) des zweiten Funktionsteils (20) formschlüssig, stoffschlüssig und/oder kraftschlüssig verbunden ist, wobei insbesondere das Griffteil (3) innerhalb der Höhlung (2) ein Positionierungsmittel (7) aufweist, in das der Verbindungsbereich (16) des ersten Funktionsteils (10) sich erstreckt, wobei das freie Ende des Verbindungsbereiches (16) ein vorsprungartiges Element (16a) aufweist, das in ein Aufnahmeöffnung des Verbindungsbereiches (26) des zweiten Funktionsteils (20) eingreift.

10. Handhabe (1) nach einem der vorhergehenden Ansprüche,
**dadurch gekennzeichnet,**
**dass** das erste Funktionsteil (10) mit einem Griffdom (14) ausgeführt ist, der zur Betätigung eines am Kraftfahrzeug angeordneten Schlosses dient.

11. Handhabe (1) nach einem der vorhergehenden Ansprüche,
**dadurch gekennzeichnet,**
**dass** das erste Funktionsteil (10) am Bereich der Eingangsöffnung (5) und/oder das zweite Funktionsteil (20) am Bereich der Ausgangsöffnung (6) eine Dichtung (8) aufweisen, wodurch ein Austritt der Vergussmasse (4) verhindert wird.

12. Handhabe (1) nach einem der vorhergehenden Ansprüche,
**dadurch gekennzeichnet,**
**dass** der Verbindungsbereich (16) des ersten Funktionsteils (10) am Griffteil (3) befestigt ist, wobei gleichzeitig das erste Funktionsteil (10) den Verbindungsbereich (26) des zweiten Funktionsteils (20) zuverlässig innerhalb der Höhlung (2) hält.

13. Handhabe (1) nach Anspruch 12,
**dadurch gekennzeichnet,**
**dass** der Verbindungsbereich (16) des ersten Funktionsteils (10) als Rastelement (16) ausgeführt ist, das an einem innerhalb der Höhlung (2) vorgesehenen Gegenrastelement (32) des Griffteils (3) angreift.

14. Handhabe (1) nach Anspruch 12 oder 13,
**dadurch gekennzeichnet,**
**dass** der Verbindungsbereich (26) des zweiten Funktionsteils (20) mit einer Öffnung (26a) ausgeführt ist, durch die der Verbindungsbereich (16) des ersten Funktionsteils (10) sich erstreckt.

15. Handhabe (1) nach einem der vorgenannten Ansprüche,
**dadurch gekennzeichnet,**
**dass** das Griffteil (3) im Bereich der Ausgangsöffnung (6) mit einem Befestigungsmittel (31) ausgebildet ist, das sich in der Höhlung (2) befindet und in Wirkverbindung mit dem zweiten Funktionsteil (20) steht.

16. Verfahren zur Herstellung einer Handhabe (1) für ein Kraftfahrzeug, mit einem vom Benutzer zu erfassenden Griffteil (3), das mit einer Höhlung (2) ausgeführt ist und mehrere Funktionsteile (10,20) aufweist,
wobei ein erstes Funktionsteil (10) eine Elektronikkomponente (11) aufweist, die innerhalb der Höhlung (2) sich befindet,
ein zweites Funktionsteil (20) ein Grifflager (20) aufweist und
einer Vergussmasse (4), die die Höhlung (2) vollständig ausfüllt und die Elektronikkomponente (11) innerhalb des Griffteils (3) fixiert,
**gekennzeichnet durch folgende Schritte:**
(a) spritzgusstechnische Herstellung des Griffteils (3) mit Höhlung (2), wobei die Höhlung (2) eine Eingangsöffnung (5) und eine Ausgangsöffnung (6) aufweist,
(b) Einführen des ersten und des zweiten Funktionsteils (10,20) in die Höhlung (2) des Griffteils (3),
(c) Befestigen eines Verbindungsbereiches (16) des ersten Funktionsteils (10) und eines Verbindungsbereiches (26) des zweiten Funktionsteils (20) innerhalb der Höhlung (2),
(d) Einbringen der Vergussmasse (4) in die Höhlung (2).

17. Verfahren nach Anspruch 16,
**dadurch gekennzeichnet,**
**dass** der Verbindungsbereich (16) des ersten Funktionsteils (10) und der Verbindungsbereich (26) des zweiten Funktionsteils (20) unmittelbar miteinander innerhalb der Höhlung (2) befestigt werden, bevor der Schritt d) erfolgt.

18. Verfahren nach Anspruch 16 oder 17,
**dadurch gekennzeichnet,**
**dass** das erste Funktionsteil (10) durch die Eingangsöffnung (5) und das zweite Funktionsteil (20) durch die Ausgangsöffnung (6) in die Höhlung (2) eingeführt wird, wobei in der Einstecklage das erste Funktionsteil (10) die Eingangsöffnung (5) und das zweite Funktionsteil (20) die Ausgangsöffnung (6) verschließt.

19. Verfahren nach einem der vorhergehenden Ansprüche,
**dadurch gekennzeichnet,**
**dass** mindestens eine Öffnung (15) am ersten und/oder zweiten Funktionsteil (20) vorgesehen ist, durch die die Vergussmasse (4) in die Höhlung (2) eingebracht wird.

20. Verfahren nach einem der vorhergehenden Ansprüche,
**dadurch gekennzeichnet,**
**dass** zuerst das erste Funktionsteil (10) bis zu seiner Einstecklage in die Höhlung (2) des Griffteils (3) eingeschoben wird, anschließend ein Kontaktelement (17) der Elektronikkomponente (11) durch eine Bohrung (18) des zweiten Funktionsteils (20) geführt und dann das zweite Funktionsteil (20) in die Höhlung (20) eingebracht wird.

21. Verfahren nach einem der vorhergehenden Ansprüche,
**dadurch gekennzeichnet,**
**dass** das erste Funktionsteil (10) lediglich mit dem zweiten Funktionsteil (20) befestigt ist, wobei gleichzeitig das erste (10) und das zweite Funktionsteil (20) in der Eingangsöffnung (5) und in der Ausgangsöffnung (6) zuverlässig gehalten sind.

22. Verfahren nach einem der vorhergehenden Ansprüche,
**dadurch gekennzeichnet,**
**dass** vor dem Verfahrensschritt des Einführens des ersten und des zweiten Funktionsteils (10,20) in die Höhlung (2) das Griffteil (3) lackiert wird.

23. Verfahren nach einem der vorhergehenden Ansprüche,
**dadurch gekennzeichnet,**
**dass** über Positionierungsmittel (7) das ersten und des zweiten Funktionsteils (10,20) innerhalb der Höhlung (2) formschlüssig arretiert werden.

24. Verfahren nach einem der vorhergehenden Ansprüche zur Herstellung einer Handhabe (1) nach einem der Ansprüche 1 bis 15.

## Claims

1. A handle (1) for a motor vehicle having a grip part (3) which is to be grasped by the user and is configured with a cavity (2) and has a plurality of functional parts (10, 20), wherein a first functional part (10) has an electronic component (11), which is situated inside the cavity (2), a second functional part (20) has a grip bearing (21) and a casting compound (4), which completely fills the cavity (2) and fixes the electronic component (11) inside the grip part (3),
**characterised in that**
the first (10) and the second functional part (20) are each configured as separate components of the grip part (3), and both parts (10, 20) close the cavity (2) at the same time, wherein both functional parts (10, 20) are configured with connection regions (16, 26) situated inside the cavity, which regions are used to reliably fasten the functional parts (10, 20) in the grip part (3).

2. The handle (1) according to Claim 1,
**characterised in that**
the functional parts (10, 20) are fastened directly to each other in the cavity (2).

3. The handle (1) according to Claim 1 or 2,
**characterised in that**
the grip part (3) has an input opening (5) and an output opening (6), wherein the openings (5, 6) are each closed by a functional part (10, 20).

4. The handle (1) according to one of the preceding claims,
**characterised in that**
the first functional part (10) has a carrier (12) to which the electronic component (11) is fastened.

5. The handle (1) according to one of the preceding claims,
**characterised in that**
the first functional part (10) has an arc-shaped profile inside the grip part (3), which profile corresponds to the shape of the grip part (3).

6. The handle (1) according to one of the preceding claims,
**characterised in that**
the carrier (12) is formed with a receiving geometry (13) for arranging the electronic component (11),
wherein the receiving geometry (13) has a channel (13a) inside which the electronic component (11) runs, wherein the channel (13a) has a plurality of inlet openings (13b), as a result of which the channel (13a) is designed to be open at least in some regions, so that the casting compound (4) is also situated inside the channel (13a).

7. The handle (1) according to one of the preceding claims,
**characterised in that**
the first (10) and the second functional part (20) are fastened to each other at least with a materially cohesive, force-fitting or form-fitting connection.

8. The handle (1) according to one of the preceding claims,
**characterised in that**
positioning means (7) are provided, which define the insertion position of the first (10) and/or second functional part (20) during assembly, wherein in particular the positioning means (7) are provided on the functional parts (10, 20) and/or on the grip part (3).

9. The handle (1) according to one of the preceding claims,
**characterised in that**
the connection region (16) of the first functional part (10) is connected in a form-fitting, materially cohesive and/or force-fitting manner to the connection region (26) of the second functional part (20), wherein in particular the grip part (3) has a positioning means (7), into which the connection region (16) of the first functional part (10) extends, inside the cavity (2), wherein the free end of the connection region (16) has a projection-like element (16a), which engages in a receiving opening of the connection region (26) of the second functional part (20).

10. The handle (1) according to one of the preceding claims,
**characterised in that**
the first functional part (10) is configured with a grip dome (14), which is used to actuate a lock arranged on the motor vehicle.

11. The handle (1) according to one of the preceding claims,
**characterised in that**
the first functional part (10) has a seal (8) in the region of the input opening (5) and/or the second functional part (20) has a seal in the region of the output opening (6), as a result of which the casting compound (4) is prevented from escaping.

12. The handle (1) according to one of the preceding claims,
**characterised in that**
the connection region (16) of the first functional part (10) is fastened to the grip part (3), wherein at the same time the first functional part (10) holds the connection region (26) of the second functional part (20) reliably inside the cavity (2).

13. The handle (1) according to Claim 12,
**characterised in that**
the connection region (16) of the first functional part (10) is configured as a latching element (16), which acts on a counter latching element (32) of the grip part (3) which is provided inside the cavity (2).

14. The handle (1) according to Claim 12 or 13,
**characterised in that**
the connection region (26) of the second functional part (20) is configured with an opening (26a) through which the connection region (16) of the first functional part (10) extends.

15. The handle (1) according to one of the preceding claims,
**characterised in that**
the grip part (3) is formed with a fastening means (31) in the region of the output opening (6), which fastening means is situated in the cavity (2) and is functionally connected to the second functional part (20).

16. A method for producing a handle (1) for a motor vehicle having a grip part (3) which is to be grasped by the user and is configured with a cavity (2) and has a plurality of functional parts (10, 20), wherein a first functional part (10) has an electronic component (11), which is situated inside the cavity (2), a second functional part (20) has a grip bearing (20) and a casting compound (4), which completely fills the cavity (2) and fixes the electronic component (11) inside the grip part (3), **characterised by** the following steps:
(a) production by injection moulding of the grip part (3) with a cavity (2), wherein the cavity (2) has an input opening (5) and an output opening (6),
(b) introduction of the first and second functional parts (10, 20) into the cavity (2) of the grip part (3),
(c) fastening of a connection region (16) of the first functional part (10) and a connection region (26) of the second functional part (20) inside the cavity (2),
(d) introduction of the casting compound (4) into the cavity (2).

17. The method according to Claim 16,
**characterised in that**
the connection region (16) of the first functional part (10) and the connection region (26) of the second functional part (20) are fastened directly to each other inside the cavity (2) before step d) is carried out.

18. The method according to Claim 16 or 17, **characterised in that**
the first functional part (10) is introduced through the input opening (5) and the second functional part (20) is introduced through the output opening (6) into the cavity (2), wherein the first function part (10) closes the input opening (5) and the second functional part (20) closes the output opening (6) when in the inserted position.

19. The method according to one of the preceding claims,
**characterised in that**
at least one opening (15) is provided in the first and/or second functional part (20), through which opening the casting compound (4) is introduced into the cavity (2).

20. The method according to one of the preceding claims,
**characterised in that**
first the first functional part (10) is inserted into the cavity (2) in the grip part (3) as far as its inserted position, then a contact element (17) of the electronic component (11) is guided through a bore (18) in the second functional part (20) and then the second functional part (20) is introduced into the cavity (20).

21. The method according to one of the preceding claims,
**characterised in that**
the first functional part (10) is fastened only to the second functional part (20), wherein at the same time the first (10) and the second (20) functional parts are held reliably in the input opening (5) and in the output opening (6).

22. The method according to one of the preceding claims,
**characterised in that**
before the method step of introducing the first and second functional parts (10, 20) into the cavity (2), the grip part (3) is painted.

23. The method according to one of the preceding claims,
**characterised in that**
the first and second functional parts (10, 20) are locked in a form-fitting manner inside the cavity (2) by positioning means (7).

24. The method according to one of the preceding claims for producing a handle (1) according to one of Claims 1 to 15.

## Revendications

1. Manette (1) pour véhicule automobile comportant
une pièce de préhension (3) empoignée par l'utilisateur, qui est conçue avec une cavité (2) et présente plusieurs pièces fonctionnelles (10,20),
dans laquelle une première pièce fonctionnelle (10) présente un composant électronique (11), qui se trouve à l'intérieur de la cavité (2),
une deuxième partie fonctionnelle (20) présente un appui de poignée (21) et
une masse de scellement (4), qui remplit complètement la cavité (2) et fixe le composant électronique (11) à l'intérieur de la pièce de préhension (3),
**caractérisée en ce que**
la première (10) et la deuxième pièce fonctionnelle (20) sont conçues respectivement comme des composants séparés de la pièce de préhension (3) et les deux pièces (10,20) obturent simultanément la cavité (2), dans laquelle
les deux pièces fonctionnelles (10,20) sont conçues avec des zones de liaison (16,26) se trouvant à l'intérieur de la cavité, qui servent à la fixation fiable des pièces fonctionnelles (10,20) dans la pièce de préhension (3).

2. Manette (1) selon la revendication, **caractérisée en ce que** les pièces fonctionnelles (10,20) sont fixées directement l'une à l'autre dans la cavité (2).

3. Manette (1) selon les revendications 1 ou 2, **caractérisée en ce que** la partie de préhension (3) présente une ouverture d'entrée (5) et une ouverture de sortie (6), dans laquelle les ouvertures (5,6) sont respectivement obturées par une pièce fonctionnelle (10,20).

4. Manette (1) selon une des revendications précédentes, **caractérisée en ce que** la première pièce fonctionnelle (10) présente un support (12), sur lequel le composant électronique (11) est fixé.

5. Manette (1)selon une des revendications précédentes, **caractérisée en ce que** la première pièce fonctionnelle (10) a un cours arqué à l'intérieur de la pièce de préhension (3), qui est adapté de manière à correspondre à la forme de la pièce de préhension (3).

6. Manette (1) selon une des revendications précédentes, **caractérisée en ce que** le support (12) est réalisé avec une géométrie de réceptacle (13) pour disposer le composant électronique (11), la géométrie de réceptacle (13) présente un canal (13a), à l'intérieur duquel s'étend le composant électronique (11), dans laquelle le canal (13a) présente plusieurs ouvertures d'entrée (13b), moyennant quoi le canal (13a) est conçu de manière ouverte au moins sur des portions, de sorte que la masse de scellement (4) se trouve à l'intérieur du canal (13a).

7. Manette (1) selon une des revendications précédentes, **caractérisée en ce que** la première (10) et la deuxième pièce fonctionnelle (20) sont fixées l'une à l'autre au moins selon une liaison par conjonction de matière, conjonction de force ou conjonction de forme.

8. Manette (1) selon une des revendications précédentes, **caractérisée en ce que** des moyens de positionnement (7) sont prévus, lesquels définissent pendant le montage la position d'enfichage de la première (10) et/ou de la deuxième pièce fonctionnelle (20), dans laquelle notamment les moyens de positionnement (7) sont prévus sur les pièces fonctionnelles (10,20) et/ou sur la pièce de préhension (3).

9. Manette (1) selon une des revendications précédentes, **caractérisée en ce que** la zone de liaison (16) de la première pièce fonctionnelle (10) estreliée à la zone de liaison (26) de la deuxième pièce fonctionnelle (20) par conjonction de forme, conjonction de matière et/ou conjonction de force, dans laquelle notamment la pièce de préhension (3) présente à l'intérieur de la cavité (2) un moyen de positionnement (7), dans lequel s'étend la zone de liaison (16) de la première pièce fonctionnelle (10), dans laquelle l'extrémité libre de la zone de liaison (16) présente un élément du type protubérance (16a), qui s'engage dans une ouverture de réception de la zone de liaison (26) de la deuxième pièce fonctionnelle (20).

10. Manette (1) selon une des revendications précédentes, **caractérisée en ce que** la première pièce fonctionnelle (10) est conçue avec un ardillon de préhension (14), qui sert à actionner une serrure disposée sur le véhicule automobile.

11. Manette (1) selon une des revendications précédentes, **caractérisée en ce que** la première pièce fonctionnelle (10) au niveau de l'ouverture d'entrée (5) et/ou la deuxième pièce fonctionnelle (20) au niveau de l'ouverture de sortie (6) présentent un joint d'étanchéité (8), moyennant quoi une fuite de la masse de scellement (4) est empêchée.

12. Manette (1) selon une des revendications précédentes, **caractérisée en ce que** la zone de liaison (16) de la première pièce fonctionnelle (10) est fixée sur la pièce de préhension (3), dans laquelle la première pièce fonctionnelle (10) maintient de manière fiable la zone de liaison (26) de la deuxième pièce fonctionnelle (20) à l'intérieur de la cavité (2).

13. Manette (1) selon la revendication 12, **caractérisée en ce que** la zone de liaison (16) de la première pièce fonctionnelle (10) est conçue comme un élément d'encliquetage (16), qui vient en prise avec un élément d'encliquetage opposé (32) de la pièce de préhension (3) prévu à l'intérieur de la cavité (2).

14. Manette (1) selon les revendications 12 ou 13, **caractérisée en ce que** la zone de liaison (26) de la deuxième pièce fonctionnelle (20) est conçue avec une ouverture (26a), à travers laquelle s'étend la zone de liaison (16) de la première pièce fonctionnelle (10).

15. Manette (1) selon une des revendications précédemment citées, **caractérisée en ce que** la pièce de préhension (3) est conçue au niveau de l'ouverture de sortie (6) avec un moyen de fixation (31), qui se trouve dans la cavité (2) et est en liaison opérationnelle avec la deuxième pièce fonctionnelle (20).

16. Procédé de fabrication d'une manette (1) pour véhicule automobile, comportant
une pièce de préhension (3) empoignée par l'utilisateur, qui est conçue avec une cavité (2) et présente plusieurs pièces fonctionnelles (10,20),
dans lequel une première pièce fonctionnelle (10) présente un composant électronique (11), qui se trouve à l'intérieur de la cavité (2),
une deuxième pièce fonctionnelle (20) présente un appui de poignée (20) et
une masse de scellement (4), qui remplit complètement la cavité (2) et fixe le composant électronique (11) à l'intérieur de la pièce de préhension (3),
**caractérisé par** les étapes suivantes de :
(a) fabrication selon la technique de moulage par injection de la pièce de préhension (3) avec la cavité (2), dans lequel la cavité (2) présente une ouverture d'entrée (5) et une ouverture de sortie (6),
(b) introduction de la première et la deuxième pièce fonctionnelle (10,20) dans la cavité (2) de la pièce de préhension (3),
(c) fixation d'une zone de liaison (16) de la première pièce fonctionnelle (10) et d'une zone de liaison (26) de la deuxième pièce fonctionnelle (20) à l'intérieur de la cavité (2),
(d) insertion de la masse de scellement (4) dans la cavité (2).

17. Procédé selon la revendication 16, **caractérisé en ce que** la zone de liaison (16) de la première pièce fonctionnelle (10) et la zone de liaison (26) de la deuxième pièce fonctionnelle (20) sont fixées l'une à l'autre directement à l'intérieur de la cavité (2), avant que l'étape d) ait lieu.

18. Procédé selon les revendications 16 ou 17, **caractérisé en ce que** la première pièce fonctionnelle (10) est introduite à travers l'ouverture d'entrée (5) et la deuxième pièce fonctionnelle (20) à travers l'ouverture de sortie (6) dans la cavité (2), dans lequel dans la position d'enfichage la première pièce fonctionnelle (10) obture l'ouverture d'entrée (5) et la deuxième pièce fonctionnelle (20) obture l'ouverture de sortie (6).

19. Procédé selon une des revendications précédentes, **caractérisé en ce que** au moins une ouverture (15) est prévue sur la première et/ou la deuxième pièce fonctionnelle (20), à travers laquelle la lasse de scellement (4) est injectée dans la cavité (2).

20. Procédé selon une des revendications précédentes, **caractérisé en ce que** d'abord la première pièce fonctionnelle (10) est glissée jusqu'à sa position d'enfichage dans la cavité (2) de la pièce de préhension (3), ensuite un élément de contact (17) du composant électronique (11) est guidé à travers un alésage (18) de la deuxième pièce fonctionnelle (20) et enfin la deuxième pièce fonctionnelle (20) est montée dans la cavité (20).

21. Procédé selon une des revendications précédentes, **caractérisé en ce que** la première pièce fonctionnelle (10) est fixée uniquement avec la deuxième pièce fonctionnelle (20), dans lequel simultanément la première (10) et la deuxième pièce fonctionnelle (20) sont maintenues dans l'ouverture d'entrée (5) et dans l'ouverture de sortie (6).

22. Procédé selon une des revendications précédentes, caractérisé en ce la pièce de préhension (3) est laquée avant l'étape de procédé consistant à introduite la première et la deuxième pièce fonctionnelle (10,20) dans la cavité (2).

23. Procédé selon une des revendications précédentes, **caractérisé en ce que** la première et la deuxième pièce fonctionnelle (10,20) sont arrêtées par conjonction de forme à l'intérieur de la cavité (2) par l'intermédiaire de moyens de positionnement (7).

24. Procédé selon une des revendications précédentes de fabrication d'une manette (1) selon une des revendications 1 à 15.
